# FASCICULE DE BREVET EUROPEEN

(11) **EP 0 932 303 B1**
(45) Date de publication et mention de la délivrance du brevet: **23.11.2005**
(21) Numéro de dépôt: 99200121.4
(22) Date de dépôt: 15.01.1999
(51) Int. Cl.: H04N 5/00

(54) **Appareil électronique grand public muni d'un moyen d'accès rapide à une mémoire**
Elektronisches Endverbrauchergerät mit Mittel zum schnellen Speicherzugriff
Consumer electronic equipment provided with fast memory access means

(30) Priorité: 21.01.1998 FR 9800615
(43) Date de publication de la demande: 28.07.1999
(73) Titulaire: Koninklijke Philips Electronics N.V., 5621 BA Eindhoven (NL)
(72) Inventeur: Goujon, Patrick, 75008 Paris (FR); Martin, Christophe, 75008 Paris (FR)
(74) Mandataire: Charpail, François

(56) Documents cités:
- US-A- 5 666 293
- OLU AKIWUMI-ASSANI ET AL: "MULTI-MEDIA TERMINAL ARCHITECTURE" PHILIPS JOURNAL OF RESEARCH, vol. 50, no. 1/02, juillet 1996, pages 169-184, XP000627668
- WINTERS M: "Using IEEE-1149.1 for in-circuit emulation" 27 septembre 1994 (1994-09-27), WESCON/94. IDEA/MICROELECTRONICS. CONFERENCE RECORD ANAHEIM, CA,USA , NEW YORK, NY, USA * page 525 - page 528 *

## Description

La présente invention concerne un procédé pour le chargement d'un programme d'application dans une mémoire de type réinscriptible d'un appareil électronique grand public comportant un processeur relié à la dite mémoire.

Elle concerne également un appareil électronique grand public comprenant un processeur relié à une mémoire de type réinscriptible destinée à contenir un programme d'application et notamment un récepteur vidéo muni de moyens pour la réception et le décodage de signaux vidéo envoyés par un émetteur de télévision.

Un récepteur vidéo selon le préambule ci-dessus est connu du brevet US 5,666,293. L'appareil décrit dans ce document comprend un système de chargement de mémoire "par air", qui nécessite la présence d'un minimum de logiciel résident, pour le remplacement ou la mise à jour du logiciel résident. Il fait appel à une carte "PCMCIA" pour le désembrouillage. Il est clair qu'un tel appareil est muni d'un logiciel de base, qui est contenu dans une mémoire permanente, de type mémoire morte ("ROM") ou mémoire réinscriptible ("EPROM", "FLASH"). Une telle mémoire est habituellement écrite ("programmée") avant son montage dans l'appareil.

Un objet de l'invention est d'augmenter la vitesse et la facilité de transfert de données vers la mémoire permanente, après son montage dans l'appareil, afin de permettre son chargement, en un temps bref, au cours d'une opération ultérieure de fabrication.

A cet effet, selon le procédé de l'invention tel que défini dans la revendication 1 le processeur, dit premier processeur, possédant des bornes spécialisées de liaison à haute vitesse destinées à une communication éventuelle avec un deuxième processeur sans l'aide d'aucun logiciel de base dans le premier processeur, ces bornes sont utilisées pour le chargement initial d'un programme d'application dans la mémoire, une fois celle ci montée dans l'appareil.

L'invention est donc basée sur l'idée de "détourner" l'usage de bornes qui sont prévues pour une toute autre utilisation. Grâce à l'utilisation de ces bornes, seulement quatre connexions sont nécessaires pour le chargement de la mémoire, ce chargement est très rapide et ne nécessite pas la présence préalable d'une application logicielle dans une mémoire de basee ("ROM"), autrement dit, le procédé s'applique à un processeur totalement vierge.

Un appareil selon l'invention tel que defini dans la revendication 3 ou 5 notamment un récepteur vidéo, dont le processeur, dit premier processeur, possède des bornes spécialisées de liaison à haute vitesse destinées à une communication éventuelle avec un deuxième processeur sans l'aide d'aucun logiciel de base dans le premier processeur, est muni d'un connecteur relié aux dites bornes et permettant la communication avec l'extérieur.

Ces aspects de l'invention ainsi que d'autres aspects plus détaillés apparaîtront plus clairement grâce à la description suivante d'un mode de réalisation constituant un exemple non limitatif.
La figure 1 représente schématiquement un récepteur vidéo.
La figure 2 représente un ensemble constitué d'un récepteur vidéo, d'une carte de maintenance, et d'un ordinateur de maintenance.

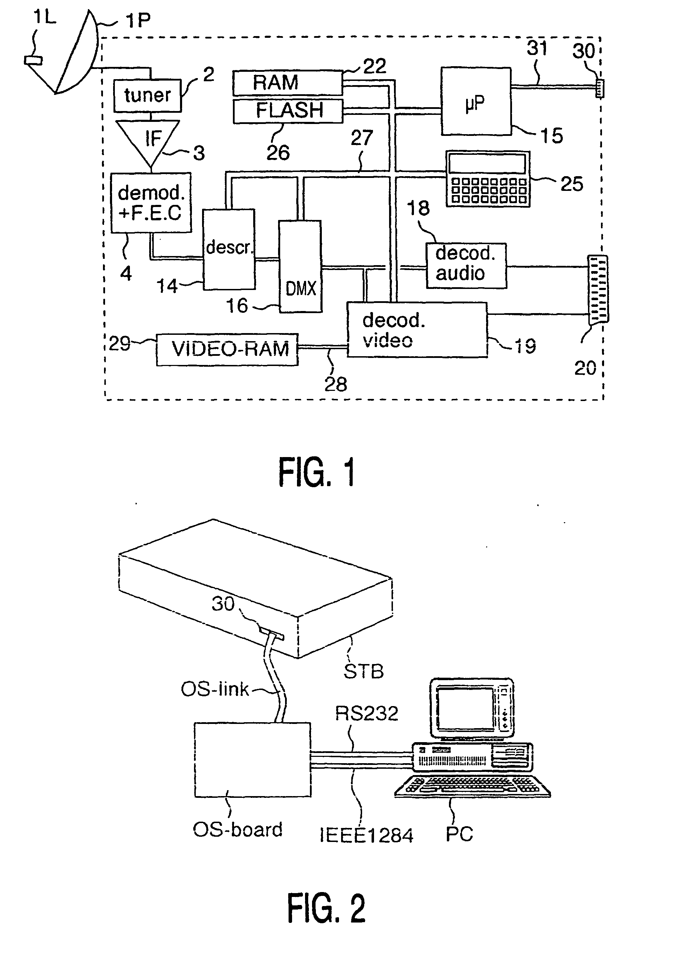

L'appareil représenté à titre d'exemple par la figure 1 est un récepteur décodeur de télévision. Il est clair que l'invention s'appliquerait également à d'autres types d'appareils électroniques grand public.

Le récepteur est connecté à une antenne parabolique 1P munie d'un module de transposition de fréquence 1L, et comprend un syntoniseur 2 appelé tuner, suivi d'un amplificateur à fréquence intermédiaire 3. Le signal à fréquence intermédiaire est démodulé et certaines erreurs corrigées, dans un module 4, puis le signal est éventuellement désembrouillé dans un module de désembrouillage 14. Le signal sortant du module de désembrouillage 14 est soumis à l'action d'un démultiplexeur 16 qui sélectionne un programme. Le signal sortant de ce démultiplexeur est transformé, dans un décodeur vidéo 19 et dans un décodeur de son 18, en signaux analogiques qui sont amenés à un connecteur de péritélévision 20, situé par exemple sur la face arrière du récepteur, pour une liaison à un téléviseur classique. En variante, les éléments de la figure pourraient aussi être des éléments internes d'un téléviseur. Les signaux vidéo traités dans le décodeur 19 peuvent être mémorisés au cours de leur traitement dans une mémoire vidéo 29, reliée au décodeur 19 par un bus 28.

Un processeur 15 est relié par un bus 27 à une mémoire de programme 26 de type "flash" dans laquelle sont inscrites entre autres les instructions de base grâce auxquelles le processeur peut fonctionner, à une mémoire vive 22 pour stocker provisoirement des données, et à un ensemble 25 de dialogue avec l'usager, comprenant par exemple un clavier de commande associé à un écran d'affichage de données, ou bien un récepteur de télécommande. Les instructions dans la mémoire de programme d'application 26 sont conservées à l'extinction du récepteur mais sont susceptibles d'être mises à jour. Elles doivent aussi être chargées lors de la fabrication du récepteur.

Le processeur 15 possède un coeur d'un type particulier connu, appelé "transputer", qui possède des bornes spécialisées de liaison à haute vitesse, appelées "OS-link", destinées à la communication en réseau avec un autre processeur, dans le cas d'une structure de plusieurs processeurs en matrice. Ce n'est pas le cas ici, mais la présence de ces bornes permet une liaison beaucoup plus rapide avec l'extérieur ; elles permettent en outre un dialogue avec le processeur, même lorsque ce dernier ne contient aucune des susdites instructions de base. Pour mémoire : dans un processeur classique, des éléments de logiciel doivent toujours rester présents pour permettre au moins le transfert de données via le processeur. L'utilisation de ces bornes est donc en outre intéressante aussi pour le test d'un récepteur, car elles permettent de vérifier les données et les bus d'adresse, même en cas de problème sur un bus, tel que court-circuit, connexion ouverte, etc..., dans des cas où le logiciel du récepteur ne peut démarrer et où il serait très difficile de faire un diagnostic et de réparer.

Les bornes de liaison à haute vitesse sont reliées par une liaison 31 à un connecteur 30 situé par exemple sous le récepteur ou à l'arrière de ce dernier. Le connecteur 30 comprend quatre conducteurs, pour respectivement la masse, l'entrée de signaux, la sortie de signaux, le passage de signaux de démarrage dits « booting signals » en langue anglaise, et éventuellement un cinquième conducteur, pour le passage de signaux d'annulation de la protection des mémoires flash.

Une opération de chargement de logiciel, ou éventuellement de mise à jour ou de test de la mémoire flash, peut être réalisée au moyen de l'équipement représenté sur la figure 2. Un ordinateur PC contient les données et les instructions nécessaires pour réaliser l'opération. Il est relié par un bus RS232 et/ou un bus IEEE1284 à un module intermédiaire OS-board, lui-même relié par une liaison dite OS-link au connecteur 30 d'un récepteur STB en cours de fabrication. Le module OS-board contient des interfaces matérielles, ainsi qu'un processeur avec un logiciel et des mémoires pour mettre en forme et transmettre les instructions de l'ordinateur vers la liaison OS-link. Il peut contenir notamment plusieurs mémoires pour mémoriser les logiciels de plusieurs types de récepteurs, et sélectionner la mémoire ad hoc en fonction du récepteur en cours de fabrication. Lorsque l'opération est terminée, il envoie un accusé de réception à l'ordinateur.

Grâce à la vitesse de la liaison OS-link (20 Méga-bits/sec) les performances suivantes peuvent être obtenues: avec une mémoire flash à accès par 32 bits , la programmation de 2 Méga-octets de mémoire flash prend 8.6 secondes, et la programmation de 1 Méga-octets de mémoire flash prend 4.5 secondes ; avec une mémoire flash à accès par 16 bits , la programmation de 1 Méga-octets de mémoire flash prend 8.6 secondes

Ces temps incluent le temps de contrôle après programmation.

Grâce au temps de programmation court ainsi obtenu, il est possible de programmer les mémoires flash sur une ligne de fabrication avec un coût faible. En pratique, c'est la mémoire elle-même qui limite la vitesse de l'opération.

## Revendications

1. Procédé pour le chargement d'un programme d'application dans une mémoire permanente de type réinscriptible d'un appareil électronique grand public comportant un processeur relié à la dite mémoire, **caractérisé en ce que** ce processeur, dit premier processeur, possède des bornes spécialisées de liaison à haute vitesse, destinées à une communication en réseau avec un deuxième processeur dans une structure de plusieurs processeurs en matrice sans l'aide d'aucun sans l'aide d'aucun logiciel de base dans le premier processeur, ces bornes étant utilisées pour le chargement initial du programme d'application dans la mémoire.

2. Procédé selon la revendication 1, **caractérisé en ce qu'**il est utilisé en usine pour charger du logiciel dans la mémoire au cours de la fabrication de l'appareil.

3. Appareil électronique grand public comprenant un processeur relié à une mémoire permanente de type réinscriptible, destinée à contenir un programme d'application, **caractérisé en ce que** le processeur, dit premier processeur, possède des bornes spécialisées de liaison à haute vitesse, destinées à une communication en réseau avec un deuxième processeur dans une structure de plusieurs processeurs en matrice sans l'aide d'aucun logiciel de base dans le premier processeur, et l'appareil est muni d'un connecteur relié aux dites bornes et permettant la communication avec l'extérieur pour charger un programme d'application dans la mémoire.

4. Appareil électronique grand public selon la revendication 3, **caractérisé en ce que** la mémoire est de type dit "flash".

5. Appareil électronique grand public selon la revendication 3 ou 4, **caractérisé en ce que** l'appareil est un récepteur vidéo muni de moyens pour la réception et le décodage de signaux vidéo envoyés par un émetteur de télévision.

## Patentansprüche

1. Verfahren für das Laden eines Anwendungsprogramms in einen Speicher vom wieder beschreibbaren Typ eines elektronischen Endverbrauchergeräts mit einem Prozessor in Verbindung mit dem besagten Speicher, **dadurch gekennzeichnet, dass** dieser Prozessor mit der Bezeichnung erster Prozessor mit Spezialklemmen zur Verbindung mit Hochgeschwindigkeit für eine Netzwerkkommunikation mit einem zweiten Prozessor in einer Struktur mit mehreren Matrixprozessoren ohne die Hilfe jedweder Basissoftware im ersten Prozessor bestimmt ist, während diese Klemmen für das anfängliche Laden des Anwendungsprogramms in den Speicher verwendet werden.

2. Verfahren nach Anspruch 1, **dadurch gekennzeichnet, dass** es im Laufe der Herstellung des Geräts im Werk zum Laden der Software in den Speicher verwendet wird.

3. Elektronisches Endverbrauchergerät mit einem Prozessor in Verbindung mit einem dafür bestimmten Permanentspeicher vom wieder beschreibbaren Typ, ein Anwendungsprogramm zu enthalten, **dadurch gekennzeichnet, dass** der Prozessor mit der Bezeichnung erster Prozessor mit Spezialklemmen zur Verbindung mit Hochgeschwindigkeit für eine Netzwerkkommunikation mit einem zweiten Prozessor in einer Struktur mit mehreren Matrixprozessoren ohne die Hilfe jedweder Basissoftware im ersten Prozessor bestimmt und das Gerät mit einem mit den besagten Klemmen verbundenen Anschluss ausgestattet ist und die Kommunikation nach außen ermöglicht, um ein Anwendungsprogramm in den Speicher zu Laden.

4. Elektronisches Endverbrauchergerät nach Anspruch 3, **dadurch gekennzeichnet, dass** der Speicher vom so genannten Typ "Flash" ist.

5. Elektronisches Endverbrauchergerät nach Anspruch 3 oder 4, **dadurch gekennzeichnet, dass** das Videoempfangsgerät mit Mitteln für den Empfang und die Dekodierung von Videosignalen, die von einem Fernsehsender übertragen werden, ausgestattet ist.

## Claims

1. A method of loading an application program in a rewritable memory of a consumer electronic apparatus comprising a processor linked to said memory, **characterized in that** this processor called first processor has specialized high-speed-link terminals intended for a network communication with a second processor in a matrix structure of various processors, these terminals being used for the initial loading of the application program in the memory.

2. A method as claimed in claim 1, **characterized in that** it is implemented at the factory for loading software in the memory during the manufacturing process.

3. A consumer electronic apparatus comprising a processor linked to a rewritable memory and intended to contain an application program, **characterized in that** the processor called first processor has specialized high-speed-link terminals intended for a network communication with a second processor in a matrix structure of various processors without the help of any basic software in the first processor, and the apparatus has a connector linked to said terminals and permitting the communication with the exterior to load an application program into the memory.

4. A consumer electronic apparatus as claimed in claim 3, **characterized in that** the memory is a "flash" memory.

5. A consumer electronic apparatus as claimed in claim 3 or 4, **characterized in that** the apparatus is a video receiver comprising means for receiving and decoding video signals sent by a television transmitter.
